# EUROPEAN PATENT APPLICATION

(11) **EP 2 890 035 A1**
(43) Date of publication of application: **01.07.2015**
(21) Application number: 13797240.2
(22) Date of filing: 25.06.2013
(51) Int. Cl.: H04L 1/18, H04L 1/00, H04L 1/16

(54) **METHOD FOR SENDING STATUS REPORT AND RLC RECEIVING ENTITY**

(30) Priority: 24.08.2012 CN 201210303922
(71) Applicant: ZTE Corporation, Shenzhen, Guangdong 518057 (CN)
(72) Inventor: ZHU, Weiwei, Shenzhen Guangdong 518057 (CN)
(74) Representative: Price, Nigel John King
(86) International application number: PCT/CN2013/077863
(87) International publication number: WO 2013/178112

(57) **Abstract**

A method for transmitting a status report and a Radio Link Control (RLC) receiving entity are provided. The method includes: an RLC receiving entity transmitting a status report to an RLC transmitting entity; and if the status report reflects a part of the reception conditions of RLC Protocol Data Units (PDUs) which are transmitted by the RLC transmitting entity, forbidding start of a status packet prohibition timer, and after being polled by the RLC transmitting entity or a reordering timer expires, transmitting a status report to the RLC transmitting entity again, the status report which is transmitted again reflecting the remaining part of the reception conditions of the RLC PDUs which are transmitted by the RLC transmitting entity. The problem solved in the related art is that when one status report cannot feed back the complete reception conditions, as the next status report will be transmitted at least after a status packet prohibition timer expires, timeliness of the status report is poor, and the RLC transmitting entity has a relatively heavy load.

## Description

### Technical Field

The present invention relates to the field of communication technology, and in particular, to a method for transmitting a status report and a Radio Link Control (RLC) receiving entity.

### Background of the Related Art

The RLC Protocol layer is located under a Packet Data Convergence Protocol (PDCP) layer and above a Media Access Control (MAC) layer in a Long Term Evolution (LTE) wireless interface protocol stack, and is a sub-layer of layer 2. The RLC layer provides segmentation and retransmission services to user service data and control data. The functions of the RLC sub-layer include link control, transfer of Protocol Data Units (PDUs) of an upper layer, recombination, segmentation, re-segmentation, and cascade, transfer of PDUs to the upper layer in order, Automatic Repeat Request (ARQ) error correction, repeatability detection, flow control, protocol error detection and repair, RLC reconstruction, etc. The functions of the RLC sub-layer are implemented by an RLC entity, and each RLC entity may be configured by Radio Resource Control (RRC) as the following three modes to perform data transfer: a Transparent Mode (TM), an Unacknowledged Mode (UM) and a Acknowledged Mode (AM). The ARQ retransmission in the AM is achieved by an RLC receiving entity transmitting a status report to an RLC transmitting entity and the RLC transmitting entity judging which PDUs have been acknowledged to be received by the RLC receiving entity and which PDUs or segments of a PDU need to be retransmitted according to an Acknowledgement Sequence Number (ACK_SN) and a Negative Acknowledgement Sequence Number (NACK SN), so as to ensure reliability of data transmission.

At present, the status report needs to be built according to protocol parameters VR(R) and VR(MS) when the status report is built at the RLC receiving entity. Wherein, VR(R) records a minimum serial number of PDUs which are not completely received and VR(MS) records a maximum serial number of PDUs which are not completely received. That is, the status report needs to report loss conditions of RLC PDUs in a range of SNs (Serial Numbers) larger than or equal to VR(R) and less than VR(MS), and at this time, ACK_SN in the status report is equal to VR(MS). However, when the packet loss is relatively serious and/or the uplink authorization is insufficient, the loss conditions of all RLC PDUs in the range from VR(R) to VR(MS) may be insufficient to be built as a status report. At this time, ACK_SN in the status report is less than VR(MS). That is, the status report can only feed back some reception conditions of PDUs in the range from VR(R) to VR(MS). In addition, after the RLC receiving entity feeds back the status report each time, it needs to start up a status packet prohibition timer (t-Status Prohibit), and the next status report is fed back at least after the status packet prohibition timer expires.

As when the packet loss is relatively serious and/or the uplink authorization is insufficient, the RLC receiving entity may only feed back a part of reception conditions of PDUs in the range from VR(R) to VR(MS), the remaining part of reception conditions of the PDUs needs to be fed back until the next status report. However, as the next status report should be fed back at least after the status packet prohibition timer expires, the timeliness of the status report is reduced, and the later a complete status report is fed back, the larger the overhead used by the RLC transmitting entity for retransmitting the lost PDUs and maintaining the transmitting window is, that is, the load of the RLC transmitting entity is aggravated.

### Summary of the Invention

In view of the above analysis, the present invention aims to provide a method for transmitting a status packet and a RLC receiving entity, to solve the problem in the related art that timeliness of the status report is poor and the load of the RLC transmitting entity is large as the next status report can only be transmitted at least after the status packet prohibition timer expires when one status report cannot feed back complete reception conditions.

In order to solve the above technical problems, the following technical solutions are used:

A method for transmitting a status report, comprising:
a Radio Link Control (RLC) receiving entity transmitting a status report to an RLC transmitting entity; and
if the status report reflects a part of the reception conditions of RLC Protocol Data Units (PDUs) which are transmitted by the RLC transmitting entity, forbidding start of a status packet prohibition timer, and after being polled by the RLC transmitting entity or after a reordering timer expires, transmitting a status report to the RLC transmitting entity again, the status report which is transmitted again reflecting the remaining part of the reception conditions of the RLC PDUs which are transmitted by the RLC transmitting entity.

Alternatively, when an acknowledgement response serial number in the status report is less than a maximum serial number of PDUs which are not received completely, the status report reflects a part of the reception conditions of the RLC PDUs which are transmitted by the RLC transmitting entity.

Alternatively, the method further comprises:
if the status report reflects all reception conditions of the RLC PDUs which are transmitted by the RLC transmitting entity, starting the status packet prohibition timer, and before the status packet prohibition timer expires, forbidding transmission of a status report to the RLC transmitting entity.

Alternatively, when an acknowledgement response serial number in the status report is equal to a maximum serial number of PDUs which are not received completely, the status report reflects all reception conditions of the RLC PDUs which are transmitted by the RLC transmitting entity.

A Radio Link Control (RLC) receiving entity, comprising a transmission unit and a processing unit, wherein,
the transmission unit is configured to transmit a status report to an RLC transmitting entity; and
the processing unit is configured to, when the status report transmitted by the transmission unit reflects a part of the reception conditions of RLC Protocol Data Units (PDUs) which are transmitted by the RLC transmitting entity, forbid start of a status packet prohibition timer, and after being polled by the RLC transmitting entity or after a reordering timer expires, transmit a status report to the RLC transmitting entity again, the status report which is transmitted again reflecting the remaining part of the reception conditions of the RLC PDUs which are transmitted by the RLC transmitting entity.

Alternatively, when an acknowledgement response serial number in the status report transmitted by the transmission unit is less than a maximum serial number of PDUs which are not received completely, the status report reflects a part of the reception conditions of the RLC PDUs which are transmitted by the RLC transmitting entity.

Alternatively, the processing unit is further configured to, when the status report transmitted by the transmission unit reflects all reception conditions of the RLC PDUs which are transmitted by the RLC transmitting entity, start the status packet prohibition timer, and before the status packet prohibition timer expires, forbid transmission of a status report to the RLC transmitting entity.

Alternatively, when an acknowledgement response serial number in the status report transmitted by the transmission unit is equal to a maximum serial number of PDUs which are not received completely, the status report reflects all reception conditions of the RLC PDUs which are transmitted by the RLC transmitting entity.

In the above technical solutions, after the RLC receiving entity transmits a status report to the RLC transmitting entity, if the status report only reflects a part of reception conditions of RLC PDUs transmitted by the RLC transmitting entity, start of the status packet prohibition timer is forbidden. As the status packet prohibition timer is not started, feedback of the remaining part of the reception conditions by the RLC receiving entity to the RLC transmitting entity will not be restricted by the condition of the expiration of the status packet prohibition timer. Therefore, the RLC receiving entity can transmit the status report to the RLC transmitting entity again after being polled by the RLC transmitting entity or the reordering timer expires, so as to feed back the remaining part of the reception conditions, thereby improving timeliness of the status report, and avoiding the problem that the load of the RLC transmitting entity is large as the complete reception conditions cannot be fed back in time.

Other features and advantages of the present invention will be set forth in the specification that follows, and a part of the features and advantages are obvious from the specification or can be understood by implementing the present invention. The purposes and other advantages of the present invention can be achieved and acquired through structures particularly pointed in the specification, claims and accompanying drawings.

### Brief Description of Drawings

Fig. 1 is a flowchart of a method for transmitting a status report according to embodiment one of the present invention;
Fig. 2 is a flowchart of a method for transmitting a status report according to embodiment two of the present invention; and
Fig. 3 is a structural diagram of an RLC receiving entity according to an embodiment of the present invention.

### Preferred Embodiments of the Present Invention

Preferable embodiments of the present invention will be described in detail below in conjunction with accompanying drawing. Wherein, the accompanying drawings constitute a part of the present application, and are used to set forth the principle of the present invention together with the embodiments of the present invention.

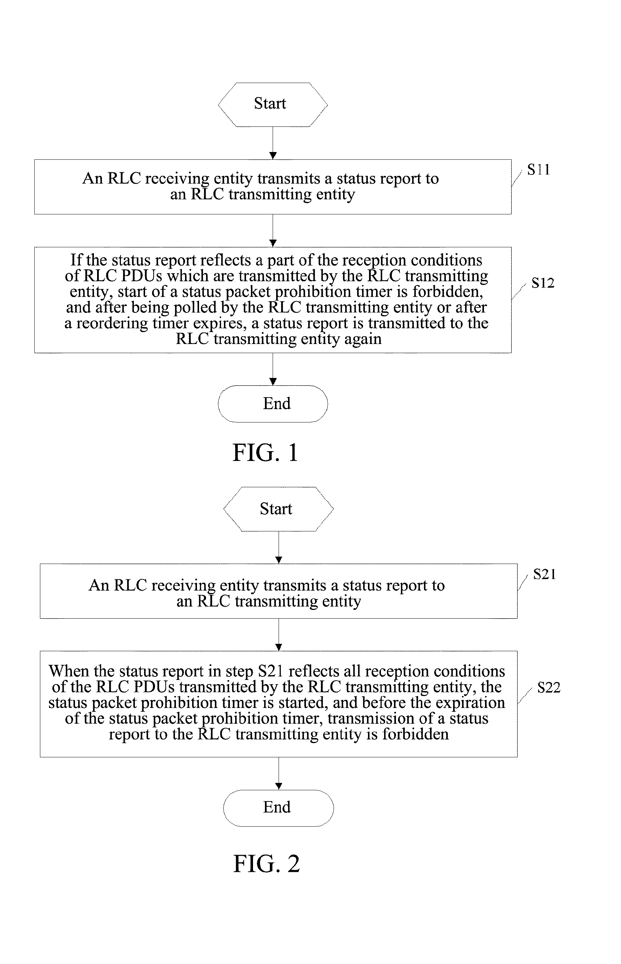

With reference to Fig. 1, illustrated is a flowchart of transmitting a status report according to embodiment one of the present invention. The flowchart of the method in Fig. 1 comprises the following steps.

In step S 11, an RLC receiving entity transmits a status report to an RLC transmitting entity.

Wherein, the status report is used to reflect reception conditions of RLC PDUs transmitted by the RLC transmitting entity. Specifically, the status report includes an ACK_SN and an NACK_SN, and after the RLC transmitting entity receives the status report, the RLC transmitting entity judges which PDUs have been acknowledged to be received by the RLC receiving entity through ACK_SN and the NACK_SN, and which PDUs or segments of a PDU need to be retransmitted to the RLC receiving entity. Wherein, ACK_SN represents that in the status report, except for the PDUs indicated by the NACK_SN, all PDUs before ACK_SN have been received.

In step S12, if the status report in step S11 reflects a part of the reception conditions of RLC PDUs which are transmitted by the RLC transmitting entity, start of a status packet prohibition timer is forbidden, and after being polled by the RLC transmitting entity or after a reordering timer expires, a status report is transmitted to the RLC transmitting entity again.

Wherein, the status report which is transmitted again in step S12 is used to reflect the remaining part of the reception conditions of the RLC PDUs which are transmitted by the RLC transmitting entity, which can be used to completely reflect the reception conditions of the RLC PDUs transmitted by the RLC transmitting entity together with the status report in step S11.

Specifically, a method for judging whether the status report in step S11 reflects a part of the reception conditions of RLC PDUs which are transmitted by the RLC transmitting entity will be provided below.

Firstly, the RLC receiving entity may acquire a protocol parameter VR(MS) of the local terminal, which records a maximum serial number of PDUs which are not completely received, and then compares ACK_SN in the status report of step S11 with VR(MS), if ACK_SN is less than VR(MS), it illustrates that the status report in step S11 reflects a part of the reception conditions of RLC PDUs which are transmitted by the RLC transmitting entity.

In step S12, after the RCL receiving entity forbids start of the status packet prohibition timer, if the RLC receiving entity is polled by the RLC transmitting entity, during a first transmission opportunity after the polling, the RLC receiving entity may build a status report again. For example, a status report which reflects reception conditions of PDUs in ACK_SN≤ SN<VR(MS) is built, and is transmitted to the RLC transmitting entity, so as to completely feed back the reception conditions of PDUs in the range of VR(R)≤SN<VR(MS). Alternatively, after the RLC receiving entity forbids start of the status packet prohibition timer, the RLC receiving entity may build a status report again during the first transmission opportunity after the recording timer (i.e., T_Reordering) expires, and transmit the status report to the RLC transmitting entity.

In the embodiment of the present invention, when the status report does not completely reflect the reception conditions of the PDUs in the range of VR(R)≤SN<VR(MS), start of the status packet prohibition timer is forbidden. As the status packet prohibition timer is not started, transmission of a status report by the RLC receiving entity to the RLC transmitting entity again will not be restricted by the condition of the expiration of the status packet prohibition timer. In this way, the RLC receiving entity can transmit the status report to the RLC transmitting entity again after being polled by the RLC transmitting entity or the reordering timer expires, so as to feed back the remaining part of the reception conditions, thereby improving timeliness of the status report. As with the manner according to the present embodiment, the RLC receiving entity can rapidly feed back the complete reception conditions to the RLC transmitting entity, thereby reducing the load of the RLC transmitting entity, and as if the complete reception conditions cannot be acquired, the RLC transmitting entity will always be ready to transmit missed PDUs and maintain the transmitting window, it will aggravate the load of the RLC transmitting entity.

With reference to Fig. 2, illustrated is a flowchart of transmitting a status report according to embodiment two of the present invention. The flowchart of the method in Fig. 2 comprises the following steps.

In step S21, the RLC receiving entity transmits a status report to the RLC transmitting entity.

This step is the same as step S11 in Fig. 1, which will not be described here.

In step S22, when the status report in step S21 reflects all reception conditions of the RLC PDUs transmitted by the RLC transmitting entity, the status packet prohibition timer is started, and before the status packet prohibition timer expires, transmission of a status report to the RLC transmitting entity is forbidden.

Specifically, a method for judging whether the status report in step S21 reflects all reception conditions of RLC PDUs which are transmitted by the RLC transmitting entity will be provided below.

Firstly, the RLC receiving entity may acquire a protocol parameter VR(MS) of the local terminal, which records a maximum serial number of PDUs which are not completely received, and then compares ACK_SN in the status report of step S21 with VR(MS), if ACK_SN is equal to VR(MS), it illustrates that the status report in step S21 reflects all reception conditions of RLC PDUs which are transmitted by the RLC transmitting entity.

In Fig. 2, when the status report in step S21 reflects all reception conditions of the RLC PDUs transmitted by the RLC transmitting entity, as in step S22 the status packet prohibition timer is started, before the status packet prohibition timer expires, even if the RLC transmitting entity is triggered many times, the status report will not be transmitted to the RLC transmitting entity, and therefore, a situation that the RLC transmitting entity frequently transmits a status report to the RLC receiving entity is avoided.

The condition of implementation of transmitting a status report according to an embodiment of the present invention will be described below in conjunction with a specific scenario.

Assuming that the RLC receiving entity transmits a status report with an ACK_SN less than VR(MS) to the RLC transmitting entity, i.e., the status report merely feeds back a part of reception conditions of PDUs in VR(R) ≤SN<VR(MS), while reception conditions of PDUs in the range of ACK_SN≤SN<VR(MS) are not fed back to the RLC transmitting entity in time due to insufficient authorization.

After the status report is transmitted, in accordance with the existing flow, the RLC receiving entity will start the status packet prohibition timer, and during execution of the status packet prohibition timer, even if the RLC transmitting entity perform polling or the reordering timer expires, the RLC receiving entity cannot transmit the status report again even if there is a transmission opportunity, and can only build a status report until a transmission opportunity that the status packet prohibition timer has expired, to feed back the reception conditions of PDUs in the range of ACK_SN≤SN<VR(MS).

However, in the present embodiment, after the status report is transmitted, the status packet prohibition timer is not started. Therefore, the status report can be built again in a transmission opportunity that it is polled by the RLC transmitting entity or the reordering timer of the local terminal has expired, to feed back the reception conditions of the PDUs in the range of ACK_SN≤ SN<VR(MS).

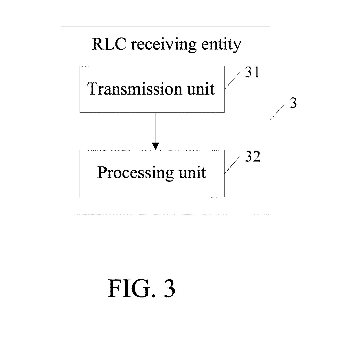

With reference to Fig. 3, illustrated is a structural diagram of an RLC receiving entity according to an embodiment of the present invention. The RLC receiving entity 3 is an executive body in the above method embodiment, which comprises a transmission unit 31 and a processing unit 32, wherein,
the transmission unit 31 is configured to transmit a status report to an RLC transmitting entity; and

Wherein, the status report transmitted by the transmission unit 31 is used to reflect reception conditions of RLC PDUs transmitted by the RLC transmitting entity, which may be a part of reception conditions of RLC PDUs or all reception conditions of RLC PDUs.

Alternatively, the status report transmitted by the transmission unit 31 generally includes an ACK_SN and a NACK_SN. After the transmission unit 31 transmits the status report to the RLC transmitting entity, the RLC transmitting entity may judge which PDUs have been acknowledged to be received by the RLC receiving entity 3 and which PDUs or segments of a PDU need to be retransmitted to the RLC receiving entity 3 according to the ACK_SN and the NACK SN in the status report. Wherein, in the status report, the ACK_SN represents that except for the PDUs indicated by the NACK_SN, all PDUs before ACK_SN have been received.

The processing unit 32 is configured to when the status report transmitted by the transmission unit 31 reflects a part of the reception conditions of RLC PDUs which are transmitted by the RLC transmitting entity, forbid start of a status packet prohibition timer, and after being polled by the RLC transmitting entity or after a reordering timer expires, transmit a status report to the RLC transmitting entity again.

Wherein, the status report which is transmitted by the processing unit 32 again is used to reflect the remaining part of the reception conditions of the RLC PDUs which are transmitted by the RLC transmitting entity, which can be used to completely reflect the reception conditions of the RLC PDUs transmitted by the RLC transmitting entity together with the status report transmitted by the transmission unit 31.

Specifically, a manner of the processing unit 32 judging whether the status report transmitted by the transmission unit 31 reflects a part of reception conditions of RLC PDUs transmitted by the RLC transmitting entity will be provided below.

Firstly, the processing unit 32 acquires a protocol parameter VR(MS) of the local terminal, which records a maximum serial number of PDUs which are not completely received, and then compares ACK_SN in the status report transmitted by the transmission unit 31 with VR(MS) acquired by the processing unit 32, if ACK_SN is less than VR(MS), it concludes that the status report transmitted by the transmission unit 31 only reflects a part of the reception conditions of RLC PDUs which are transmitted by the RLC transmitting entity.

After the processing unit 32 forbids start of the status packet prohibition timer, if the processing unit 32 is polled by the RLC transmitting entity, during a first transmission opportunity after the polling, the processing unit 32 may build a status report again. For example, a status report which reflects reception conditions of PDUs in ACK_SN≤SN<VR(MS) is built, and is transmitted to the RLC transmitting entity, so as to completely feed back the reception conditions of PDUs in the range of VR(R)≤SN<VR(MS). Alternatively, after the processing unit 32 forbids start of the status packet prohibition timer, the processing unit 32 may build a status report again during the first transmission opportunity after the recording timer (i.e., T_Reordering) expires, and transmit the status report to the RLC transmitting entity.

In the embodiment of the present invention, when the status report does not completely reflect the reception conditions of the PDUs in the range of VR(R)≤SN<VR(MS), the start of the status packet prohibition timer is forbidden. As the status packet prohibition timer is not started, transmission of a status report by the RLC receiving entity to the RLC transmitting entity again will not be restricted by the condition of the expiration of the status packet prohibition timer. In this way, the RLC receiving entity can transmit the status report to the RLC transmitting entity again after being polled by the RLC transmitting entity or the reordering timer expires, so as to feed back the remaining part of the reception conditions, thereby improving timeliness of the status report. As with the manner according to the present embodiment, the RLC receiving entity can rapidly feed back the complete reception conditions to the RLC transmitting entity, thereby reducing the load of the RLC transmitting entity, and as if the complete reception conditions cannot be acquired, the RLC transmitting entity will always be ready to transmit missed PDUs and maintain the transmitting window, it will aggravate the load of the RLC transmitting entity.

Continue to refer to Fig. 3, in another implementation,
the processing unit 32 is further configured to when the status report transmitted by the transmission unit 31 reflects all reception conditions of RLC PDUs which are transmitted by the RLC transmitting entity, start the status packet prohibition timer, and before the status packet prohibition timer expires, forbid transmission of a status report to the RLC transmitting entity.

Alternatively, a manner of the processing unit 32 judging whether the status report transmitted by the transmission unit reflects all reception conditions of RLC PDUs transmitted by the RLC transmitting entity will be provided below.

Firstly, the processing unit 32 may acquire a protocol parameter VR(MS) of the local terminal, which records a maximum serial number of PDUs which are not completely received, and then compares ACK_SN in the status report transmitted by the transmission unit 31 with VR(MS) acquired by itself, if ACK_SN is equal to VR(MS), it illustrates that the status report transmitted by the transmission unit 31 reflects all reception conditions of RLC PDUs which are transmitted by the RLC transmitting entity.

In the present embodiment, as when the status report transmitted by the transmission unit 31 reflects all reception conditions of the RLC PDUs transmitted by the RLC transmitting entity, the status packet prohibition timer is started by the processing unit 32, before the status packet prohibition timer expires, even if the processing unit 32 is triggered many times, the status report will not be transmitted to the RLC transmitting entity, and therefore, a situation that the RLC transmitting entity frequently transmits a status report to the RLC receiving entity is avoided.

The above description is only the specific embodiments of the present invention, but the protection scope of the present invention is not limited to the above description. Any skilled in the art can easily think of changes or substitutions within the technique scope disclosed in the present invention, which should be covered within the protection scope of the present invention. Therefore, the protection scope of the present invention should be based on the protection scope described in the claims.

### Industrial Applicability

In the above technical solutions, after the RLC receiving entity transmits a status report to the RLC transmitting entity, if the status report only reflects a part of reception conditions of RLC PDUs transmitted by the RLC transmitting entity, start of the status packet prohibition timer is forbidden. As the status packet prohibition timer is not started, feedback of the remaining part of the reception conditions by the RLC receiving entity to the RLC transmitting entity will not be restricted by the condition of the expiration of the status packet prohibition timer. Therefore, the RLC receiving entity can transmit the status report to the RLC transmitting entity again after being polled by the RLC transmitting entity or the reordering timer expires, so as to feed back the remaining part of the reception conditions, thereby improving timeliness of the status report, and avoiding the problem that the load of the RLC transmitting entity is large as the complete reception conditions cannot be fed back in time. Therefore, the present invention has strong industrial applicability.

## Claims

1. A method for transmitting a status report, comprising:
a Radio Link Control (RLC) receiving entity transmitting a status report to an RLC transmitting entity; and
if the status report reflects a part of reception conditions of RLC Protocol Data Units (PDUs) which are transmitted by the RLC transmitting entity, forbidding start of a status packet prohibition timer, and after being polled by the RLC transmitting entity or after a reordering timer expires, transmitting a status report to the RLC transmitting entity again, the status report which is transmitted again reflecting a remaining part of the reception conditions of the RLC PDUs which are transmitted by the RLC transmitting entity.

2. The method according to claim 1, wherein,
when an acknowledgement response serial number in the status report is less than a maximum serial number of PDUs which are not received completely, the status report reflects a part of the reception conditions of the RLC PDUs which are transmitted by the RLC transmitting entity.

3. The method according to claim 1 or 2, further comprising:
if the status report reflects all reception conditions of the RLC PDUs which are transmitted by the RLC transmitting entity, starting the status packet prohibition timer, and before expiration of the status packet prohibition timer , forbidding transmission of a status report to the RLC transmitting entity.

4. The method according to claim 3, wherein,
when an acknowledgement response serial number in the status report is equal to a maximum serial number of PDUs which are not received completely, the status report reflects all reception conditions of the RLC PDUs which are transmitted by the RLC transmitting entity.

5. A Radio Link Control (RLC) receiving entity, comprising a transmission unit and a processing unit, wherein,
the transmission unit is configured to transmit a status report to an RLC transmitting entity; and
the processing unit is configured to, when the status report transmitted by the transmission unit reflects a part of reception conditions of RLC Protocol Data Units (PDUs) which are transmitted by the RLC transmitting entity, forbid start of a status packet prohibition timer, and after being polled by the RLC transmitting entity or after a reordering timer expires, transmit a status report to the RLC transmitting entity again, the status report which is transmitted again reflecting a remaining part of the reception conditions of the RLC PDUs which are transmitted by the RLC transmitting entity.

6. The RLC receiving entity according to claim 5, wherein,
when an acknowledgement response serial number in the status report transmitted by the transmission unit is less than a maximum serial number of PDUs which are not received completely, the status report reflects a part of the reception conditions of the RLC PDUs which are transmitted by the RLC transmitting entity.

7. The RLC receiving entity according to claim 5 or 6, wherein,
the processing unit is further configured to, when the status report transmitted by the transmission unit reflects all reception conditions of the RLC PDUs which are transmitted by the RLC transmitting entity, start the status packet prohibition timer, and before expiration of the status packet prohibition timer , forbid transmission of a status report to the RLC transmitting entity.

8. The RLC receiving entity according to claim 7, wherein,
when an acknowledgement response serial number in the status report transmitted by the transmission unit is equal to a maximum serial number of PDUs which are not received completely, the status report reflects all reception conditions of the RLC PDUs which are transmitted by the RLC transmitting entity.
